# EUROPÄISCHE PATENTANMELDUNG

(11) **EP 0 927 975 A2**
(43) Veröffentlichungstag der Anmeldung: **07.07.1999**
(21) Anmeldenummer: 98440254.5
(22) Anmeldetag: 13.11.1998
(51) Int. Cl.: G07F 7/10

(54) **Zugangskontrolleinrichtung für ein Service-on-demand System**

(30) Priorität: 05.12.1997 DE 19753933
(71) Anmelder: ALCATEL, 75008 Paris (FR)
(72) Erfinder: Barth, Ulrich, 70825 Münchingen (DE)
(74) Vertreter: Menzietti, Domenico, Dipl.-Ing

(57) **Zusammenfassung**

Eine Zugangskontrolleinrichtung für ein Service-on-demand System (1) mit einer Set-Top Box (2), die an das Service-on-demand System angeschlossen ist, und eine Smart-Card Schnittstelle (3) sowie einen Dekoder (5) umfaßt, der Information, die auf einer von einem Benutzer in die Schnittstelle (3) eingeführten Smart-Card (4) gespeichert ist, auslesen und dekodieren kann, sowie mit einer Steuerung, die dem Benutzer den Zugang zum Service-on-demand System in Abhängigkeit von der dekodierten Information freigeben oder sperren kann, ist dadurch gekennzeichnet, daß Eingabemittel (6) zum Eingeben einer Geheimzahl durch den Benutzer vorgesehen sind, und daß der Dekoder (5) der Set-Top Box (2) erst nach Eingabe einer zulässigen Geheimzahl Zugriff auf die eingeführte Smart-Card (4) erhält und die auf ihr gespeicherte Information auslesen und dekodieren kann. Damit kann ein unbefugter Zugriff auf das System mit höherer Sicherheit als bisher ausgeschlossen werden. Außerdem sind die auf der Smart-Card gespeicherten sensiblen Daten nunmehr ebenfalls durch das Paßwort gegen nichtautorisiertes Auslesen zusätzlich geschützt.

## Beschreibung

Die Erfindung betrifft eine Zugangskontrolleinrichtung für ein Service-on-demand (Dienst-auf-Abruf) System mit einer Set-Top Box, die an das Service-on-demand System angeschlossen ist, und eine Smart-Card Schnittstelle sowie einen Dekoder umfaßt, der Information, die auf einer von einem Benutzer in die Schnittstelle eingeführten Smart-Card gespeichert ist, auslesen und dekodieren kann, sowie mit einer Steuerung, die dem Benutzer den Zugang zum Service-on-demand System in Abhängigkeit von der dekodierten Information freigeben oder sperren kann.

Ein Service-on-demand System mit einer derartigen Zugangskontrolleinrichtung ist beispielsweise in der deutschen Zeitschrift "Funkschau", Ausgabe 3, Seiten 39 bis 41, 1996 beschrieben.

Service-on-demand Systeme finden derzeit immmer größere Verbreitung. Insbesondere als Video-on-demand oder Pay-TV, aber auch im Bereich von Bankdienstleistungen und anderen elektronisch vermittelbaren Mehrwertdiensten erfreut sich schon heute der automatisierte Zugriff auf ein Dienstleistungsnetz von der Ferne aus, beispielsweise aus dem eigenen Wohnzimmer, bei den Kunden größter Beliebtheit.

Im Gegensatz zu Telefonkarten, auf denen beim Erwerb ein festes Guthaben eingespeichert ist, das bei Benutzung nach und nach verbraucht werden kann, so daß irgendwann kein Guthaben mehr auf der Karte gespeichert ist und die Telefonkarte wertlos wird, sind die bei Service-on-demand Systemen verwendeten Smart-Cards in der Regel gegen entsprechende Bezahlung oder Abbuchung von einem Guthabenkonto wiederauffüllbar. Oft ist aber auch auf der Smart-Card selbst gar kein Guthaben vorgesehen, sondern nach Zugang in das System erfolgt eine Verrechnung über ein kundenbezogenes elektronisches Guthabenkonto. Daher ist es bei Service-on-demand Systemen besonders wichtig, die Zugangsberechtigung des jeweiligen Benutzers zu kontrollieren, was sich bei Verwendung von Telefonkarten erübrigt.

Zu diesem Zweck verfügt ein Service-on-demand System üblicherweise über eine Vielzahl von Set-Top Boxen mit SmartCard Schnittstelle und einem Dekoder, der die auf einer durch einen Benutzer eingeführten Smart-Card gespeicherte Information ausliest und dekodiert. In einer Steuerung wird dann abhängig von der dekodierten Information der Zugang zu dem Punkt-zu-Mehrpunkt-System freigegeben oder gesperrt. Die Wirkungsweise einer solchen Set-Top Box ist beispielsweise beschrieben in dem Artikel "Evolution of the Digital Set-Top Box" in der Conference Publication No. 428 der International Broadcasting Convention, Seiten 277 bis 282, 12-16 September 1996.

In anders aufgebauten elektronischen Umgebungen, wie beispielsweise in Multi-User Netzen, sind als Zugangsberechtigungskontrolle für Systemteilnehmer noch weitergehende Sicherungen eingebaut. So ist aus dem Artikel von Chang und Hwang, Computers Math. Applic., Vol. 26, No. 7, Seiten 1927, 1993 die Verwendung eines Paßworts zusätzlich zur Benutzung einer Smart-Card als Voraussetzung für die Zugangsfreigabe in ein Computersystem bekannt. Ein erhebliches Problem ergibt sich dabei aus dem Transport des an der Peripherie durch den Benutzer eingegebenen Paßworts durch das Netz zu einer Zentraleinheit, in der die Authentisierung durch Vergleich mit einer abgespeicherten Liste von zulässigen Paßwörtern vorgenommen wird. Auf dem Weg durch das Netz kann das Paßwort nämlich möglicherweise abgefangen und dechiffriert werden, so daß unbefugte Dritte auf diese Weise eine einfache Zugangsmöglichkeit zum Netz erhalten. Problematisch ist auch, daß die auf der Smart-Card gespeicherten Informationen unabhängig von einem Berechtigungsnachweis ausgelesen werden können.

Aufgabe der vorliegenden Erfindung ist es demgegenüber, eine Zugangskontrolleinrichtung für ein Service-on-demand System der eingangs beschriebenen Art vorzustellen, die einen unbefugten Zugriff auf das System mit höherer Sicherheit ausschließen kann als bisher verwendete Einrichtungen, wobei die auf der Smart-Card gespeicherten, meist empfindlichen und benutzerbezogenen Daten einen höheren Schutz gegen unbefugtes Auslesen erhalten sollen.

Erfindungsgemäß wird diese Aufgabe dadurch gelöst, daß Eingabemittel zum Eingeben einer Geheimzahl durch den Benutzer vorgesehen sind, und daß der Dekoder der Set-Top Box erst nach Eingabe einer zulässigen Geheimzahl Zugriff auf die eingeführte Smart-Card erhält und die auf ihr gespeicherte Information auslesen und dekodieren kann.

Durch die Verwendung einer Geheimzahl zusätzlich zu der bereits bisher erforderlichen Einführung einer Smart-Card in die Set-Top Box wird bereits eine wesentlich höhere Barriere gegen ein unbefugtes Eindringen in das Service-on-demand System aufgebaut. Der Schutz der auf der Smart-Card abgespeicherten Daten wird dadurch erhöht, daß diese erst nach der Eingabe einer zulässigen Geheimzahl von der Set-Top Box ausgelesen werden können.

Die erfindungsgemäße Zugangskontrolleinrichtung umfaßt als Eingabemittel vorzugsweise eine Tastatur und/oder sprachgesteuerte Fernbedienungselemente, wobei anstelle oder in Ergänzung zu einer Tastatur auch Maussysteme oder ähnliche kontinuierliche Eingabemittel Verwendung finden können.

Besonders bevorzugt ist eine Ausführungsform der erfindungsgemäßen Zugangskontrolleinrichtung die sich dadurch auszeichnet, daß für den jeweils befugten Benutzer spezifische Geheimzahl auf der Smart-Card gespeichert ist, und daß eine Freigabe des Zugangs zum Service-on-demand System erst dann erfolgen kann, wenn die vom Benutzer eingegebene Geheimzahl mit der auf der Smart-Card gespeicherten übereinstimmt. Dadurch kann ein Vergleich der Geheimzahl direkt vor Ort im Bereich der Set-Top Box erfolgen, ohne daß ein Transport der Geheimzahl über längere Datenwege mit den oben geschilderten Unsicherheiten nötig wäre.

Ganz besonders bevorzugt ist eine Weiterbildung dieser Ausführungsform, bei der ein Zugriff des Dekoders auf die übrigen auf der Smart-Card gespeicherten Daten erst dann erfolgen kann, wenn die vom Benutzer eingegebene Geheimzahl mit der auf der Smart-Card gespeicherten übereinstimmt. Auf diese Weise ist die Smart-Card selbst durch die Geheimzahl geschützt, während bei bisher bekannten Lösungen lediglich die Eingabe der Geheimzahl parallel zum Einführen der Smart-Card in die Set-Top Box eine zusätzliche Zugangsbarriere gegen unbefugte Benutzung des Systems darstellte.

Eine noch höhere Sicherheit der auf der Smart-Card gespeicherten Daten und insbesondere der auf ihr gespeicherten Geheimzahl gegen einen unbefugten Eingriff wird dadurch erreicht, daß die auf die Smart-Card gespeicherte Geheimzahl prinzipiell nicht auslesbar ist, und daß auf der Smart-Card eine Recheneinheit bzw. eine elektronische Schaltung vorgesehen ist, die einen Vergleich der eingegebenen mit der gespeicherten Geheimzahl durchführen kann. Ein Unbefugter, der in den Besitz der Smart-Card gekommen ist, kann also ohne Kenntnis der Geheimzahl mit der Smart-Card gar nichts mehr anfangen.

Vorteilhaft ist auch eine Ausführungsform der erfindungsgemäßen Zugangskontrolleinrichtung, bei der die auf der SmartCard gespeicherten Daten zumindest teilweise austauschbar bzw. erneuerbar sind. Im Gegensatz zu Systemen, bei denen die auf der Smart-Card gespeicherten Daten nachträglich nicht mehr verändert werden können, ergibt sich damit eine wesentlich erhöhte Flexibilität für den Benutzer, den Systembetreiber und die an das System angeschlossenen Anbieter.

So können auf der Smart-Card neben der benutzerspezifischen Geheimzahl auch andere, durch den Benutzer selbst eingebbare Daten, z.B. Konfigurationsdaten für persönlich gestaltete Benutzeroberflächen (look & feel), set-up-lnformationen, Sprungadressen (book marks) etc. abgespeichert sind.

Alternativ oder zusätzlich können auf der Smart-Card aber auch andere, durch einen am Service-on-demand System angeschlossenen Diensteanbieter eingebbare, benutzerbezogene Daten, z.B. Kreditrahmen, persönliche Rabatte etc. und/oder für größere Benutzergruppen bestimmte Informationen, z.B. aktuelle Sonderangebote, Ankündigungen, Termine etc. abgespeichert werden.

In den Rahmen der Erfindung fällt auch ein Verfahren zum Betrieb der oben beschriebenen Zugangskontrolleinrichtung, welches sich dadurch auszeichnet, daß der Dekoder der SetTop Box eine auf der Smart-Card gespeicherte individuelle Kundennummer ausliest und an einen am Service-on-demand System angeschlossenen Server bzw. eine Zentralstation weiterleitet, und daß die Kundennummer im Server bzw. der Zentralstation mit dort vorhandenen Datenbankeintragungen verglichen und bei Übereinstimmung mit einer dort registrierten Kundennummer dem Benutzer über die Set-Top Box ein Zugang zum Service-on-demand System freigegeben wird. Anhand der Kundennummer kann dann eine individuelle elektronischen Kontoführung erfolgen, bei der die Benutzung von Dienstleistungen durch den Kunden im System abgerechnet wird.

Vorzugsweise wird die Kundennummer in verschlüsselter Form, insbesondere RSA-verschlüsselt, über den Rückkanal des Service-on-demand Systems von der Set-Top Box an den Server bzw. die Zentralstation weitergeleitet, um einen unbefugten Zugriff auf die Kundennummer zu verhindern oder zumindest zu erschweren.

Bei einer weiteren vorteilhaften Verfahrensvariante ist vorgesehen, daß zusammen mit der Kundennummer ein Zeitstempel von der Set-Top Box an den Server bzw. die Zentralstation weitergeleitet wird, daß der empfangene Zeitstempel zunächst mit der aktuellen Zeit verglichen wird, und daß erst nach Feststellung einer Übereinstimmung der beiden Zeiten innerhalb eines vorgewählten Zeitfensters die weitere Zugangsfreigabeprozedur ablaufen kann. Dadurch wird eine Reproduktion durch unbefugte Dritte, die in den Besitz der SmartCard gelangt sind, praktisch unmöglich gemacht.

Bei einer weiteren vorteilhaften Verfahrensvariante wird zusammen mit der Kundennummer auch eine in der Set-Top Box abgespeicherte Gerätenummer an den Server bzw. die Zentralstation weitergeleitet. Die Gerätenummer gibt dem Systembetreiber die Möglichkeit, nicht-autorisierte (beispielsweise als gestohlen gemeldete) Set-Top Boxen von der Benutzung des System auszusperren.

Vorteilhaft für das Systemmanagement ist es auch, wenn der Systemzugriff trotz Verwendung der Smart-Card und Eingabe der korrekten Geheimzahl gesperrt werden kann, beispielsweise bei durch den befugten Benutzer gemeldetem Verlust der Smart-Card oder bei Nichterfüllung von Verpflichtungen durch den Benutzer.

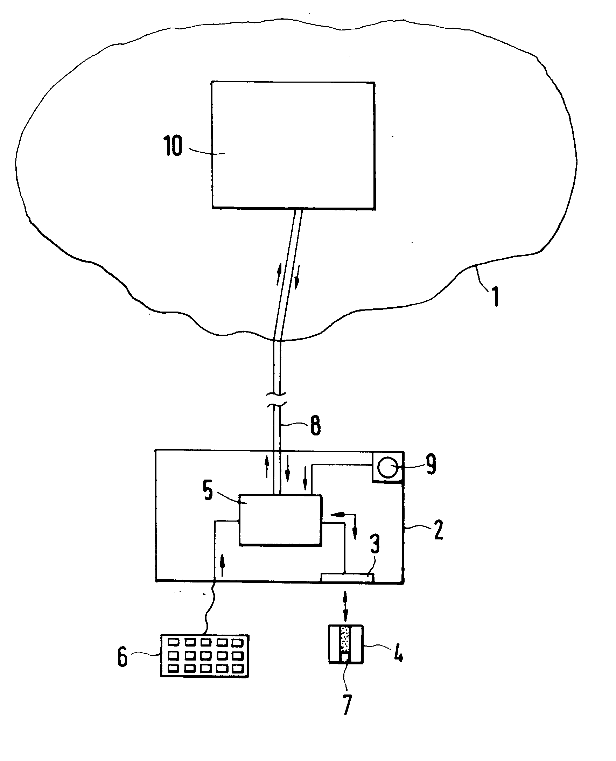

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert.

Die Figur zeigt eine schematische Darstellung der erfindungsgemäßen Zugangskontrolleinrichtung für ein Service-on-demand System.

Die erfindungsgemäße Zugangskontrolleinrichtung umfaßt eine an das Service-on-demand (Dienst-auf-Abruf) System 1 angeschlossene Set-Top Box 2 mit einer Schnittstelle 3 zum Einführen einer Smart-Card 4 und einem Dekoder 5 zum Auslesen und Dekodieren von auf der Smart-Card 4 gespeicherter Information; An die Set-Top Box 2 angeschlossen ist eine Tastatur 6, die als Eingabemittel zur Eingabe einer Geheimzahl in die Set-Top Box 2 durch einen in der Figur nicht dargestellten Benutzer dient. Diese benutzerspezifische Geheimzahl ist gleichzeitig in einer prinzipiell nicht auslesbaren Form auf der Smart-Card 4 gespeichert. Daneben enthält die Smart-Card 4 aber auch teilweise austauschbare bzw. erneuerbare Daten, und zwar durch den Benutzer selbst eingebbare (beispielsweise Konfigurationsdaten, Set-up-Information, Sprungadressen etc.) und durch einen am Service-on-demand System 1 angeschlossenen Diensteanbieter oder dem Systembetreiber eingebbare, benutzerbezogene Daten (beispielsweiser Kreditrahmen, spezielle Kundenrabatte) und/oder für größere Benutzergruppen bestimmte Informationen (aktuelle Sonderangebote, Ankündigungen, Termine usw.).

Der Dekoder 5 erhält aber erst dann Zugriff auf die auslesbaren Daten der Smart-Card 4, wenn nach Eingabe der Geheimzahl über die Tastatur 6 von der Smart-Card 4 eine Übereinstimmung mit der auf ihr nicht auslesbar eingespeicherten Geheimzahl festgestellt wurde. Der Vergleich der eingespeicherten mit der eingegebenen Geheimzahl wird durch eine auf der Smart-Card 4 vorgesehene elektronische Schaltung 7 bzw. eine entsprechende Recheneinheit auf der Smart-Card 4 durchgeführt.

Führt der Vergleich zu einem positiven Ergebnis, so liest der Dekoder 5 eine auf der Smart-Card 4 auslesbar abgespeicherte Kundennummer aus, versieht diese mit einem aktuellen Zeitstempel aus einer Zeituhr 9 und gibt die Daten in verschlüsselter Form zusammen mit der Gerätenummer der Set-Top Box 2 über einen Rückkanal 8 an das Service-on-demand System 1 weiter, wo die Information an einen Server bzw. an die Zentralstation 10 geleitet wird. Dort wird dann der Zeitstempel mit der aktuellen Uhrzeit verglichen und bei Feststellung einer Übereinstimmung der beiden Zeiten innerhalb eines vorgewählten Zeitfensters die Zugangsfreigabeprozedur abgewickelt.

Dazu wird die Kundennummer mit in der Zentralstation 10 vorhandenen Datenbankeintragungen verglichen und bei Übereinstimmung mit einer dort registrierten Kundennummer, falls kein Sperrvermerk vorliegt, dem anfragenden Kunden der Zugang zum Service-on-demand System 1 über die Set-Top Box 2 freigegeben. Ein Sperrvermerk kann beispielsweise dann vorgesehen werden, wenn der befugte Benutzer den Verlust seiner Smart-Card 4 gemeldet hatte oder z.B. seinen Zahlungsverpflichtungen gegenüber einem Diensteanbieter im Service-on-demand System 1 nicht nachgekommen ist. Außerdem kann der Zugang zum System auch dann gesperrt werden, wenn die an die Zentralstation 10 gesendete Gerätenummer anzeigt, daß die Set-Top Box 2 für einen Zugriff auf das System nicht autorisiert ist, weil das Gerät beispielsweise als gestohlen gemeldet ist.

Vorteilhafterweise kann jeder berechtigte Benutzer mittels seiner Smart-Card 4 und der nur ihm bekannten Geheimzahl von jeder beliebigen Set-Top Box 2 aus Zugang zum Service-on-demand System 1 erhalten, wenn seitens des Systemmanagements die übrigen Voraussetzungen (keine vorliegenden Sperrvermerke) erfüllt sind. Bei Verlust der Smart-Card 4 durch den befugten Kunden kann ein Unbefugter, der die Geheimzahl nicht kennt, weder in das System eindringen, noch Daten von der Smart-Card 4 auslesen. Eine weitere Sicherheit beispielsweise bei unbefugt reproduzierter Smart-Card 4 bzw. der darauf befindlichen Daten wird durch den Zeitvergleich nach der Zeitstempelung in der Set-Top Box 2 erreicht.

## Patentansprüche

1. Zugangskontrolleinrichtung für ein Service-on-demand (Dienst-auf-Abruf) System (1) mit einer Set-Top Box (2), die an das Service-on-demand System (1) angeschlossen ist, und eine Smart-Card Schnittstelle (3) sowie einen Dekoder (5) umfaßt, der Information, die auf einer von einem Benutzer in die Schnittstelle (3) eingeführten Smart-Card (4) gespeichert ist, auslesen und dekodieren kann, sowie mit einer Steuerung, die dem Benutzer den Zugang zum Service-on-demand System (1) in Abhängigkeit von der dekodierten Information freigeben oder sperren kann,
dadurch gekennzeichnet,
daß Eingabemittel (6) zum Eingeben einer Geheimzahl durch den Benutzer vorgesehen sind, und daß der Dekoder (5) der Set-Top Box (2) erst nach Eingabe einer zulässigen Geheimzahl Zugriff auf die eingeführte Smart-Card (4) erhält und die auf ihr gespeicherte Information auslesen und dekodieren kann.

2. Zugangskontrolleinrichtung nach Anspruch 1, dadurch gekennzeichnet, daß die Eingabemittel (6) eine Tastatur und/oder sprachgesteuerte Fernbedienungselemente umfassen.

3. Zugangskontrolleinrichtung nach Anspruch 1 oder 2, dadurch gekennzeichnet, daß die für den jeweils befugten Benutzer spezifische Geheimzahl auf der Smart-Card (4) gespeichert ist, und daß eine Freigabe des Zugangs zum Service-on-demand System (1) erst dann erfolgen kann, wenn die vom Benutzer eingegebene Geheimzahl mit der auf der Smart-Card (4) gespeicherten übereinstimmt.

4. Zugangskontrolleinrichtung nach Anspruch 3, dadurch gekennzeichnet, daß ein Zugriff des Dekoders (5) auf die übrigen auf der Smart-Card (4) gespeicherten Daten erst dann erfolgen kann, wenn die vom Benutzer eingegebene Geheimzahl mit der auf der Smart-Card (4) gespeicherten übereinstimmt.

5. Zugangskontrolleinrichtung nach einem der Ansprüche 3 oder 4, dadurch gekennzeichnet, daß die auf die SmartCard (4)gespeicherte Geheimzahl prinzipiell nicht auslesbar ist, und daß auf der Smart-Card (4) eine Recheneinheit bzw. eine elektronische Schaltung (7) vorgesehen ist, die einen Vergleich der eingegebenen mit der gespeicherten Geheimzahl durchführen kann.

6. Zugangskontrolleinrichtung nach einem der vorhergehenden Ansprüche, dadurch gekennzeichnet, daß die auf der Smart-Card (4) gespeicherten Daten zumindest teilweise austauschbar bzw. erneuerbar sind.

7. Zugangskontrolleinrichtung nach Anspruch 6, dadurch gekennzeichnet, daß auf der Smart-Card (4) neben der benutzerspezifischen Geheimzahl auch andere, durch den Benutzer selbst eingebbare Daten, z.B. Konfigurationsdaten für persönlich gestaltete Benutzeroberflächen (look & feel), set-up-lnformationen, Sprungadressen (book marks) etc. abgespeichert sind.

8. Zugangskontrolleinrichtung nach Anspruch 6 oder 7, dadurch gekennzeichnet, daß auf der Smart-Card (4) neben der benutzerspezifischen Geheimzahl auch andere, durch einen am Service-on-demand System (1) angeschlossenen Diensteanbieter eingebbare, benutzerbezogene Daten, z.B. Kreditrahmen, persönliche Rabatte etc. und/oder für größere Benutzergruppen bestimmte Informationen, z.B. aktuelle Sonderangebote, Ankündigungen, Termine etc. abgespeichert sind.

9. Verfahren zum Betrieb einer Zugangskontrolleinrichtung nach einem der vorhergehenden Ansprüche, dadurch gekennzeichnet, daß der Dekoder (5) der Set-Top Box (2) eine auf der Smart-Card (4) gespeicherte individuelle Kundennummer ausliest und an einen am Service-on-demand System (1) angeschlossenen Server bzw. eine Zentralstation (10) weiterleitet, und daß die Kundennummer im Server bzw. der Zentralstation (10) mit dort vorhandenen Datenbankeintragungen verglichen und bei Übereinstimmung mit einer dort registrierten Kundennummer dem Benutzer über die Set-Top Box (2) ein Zugang zum Service-on-demand System (1) freigegeben wird.

10. Verfahren nach Anspruch 9, dadurch gekennzeichnet, daß die Kundennummer in verschlüsselter Form, insbesondere RSA-verschlüsselt, über den Rückkanal (8) des Service_ on-demand Systems (1) von der Set-Top Box (2) an den Server bzw. die Zentralstation (10) weitergeleitet wird.

11. Verfahren nach Anspruch 9 oder 10, dadurch gekennzeichnet, daß zusammen mit der Kundennummer ein Zeitstempel von der Set-Top Box (2) an den Server bzw. die Zentralstation (10) weitergeleitet wird, daß der empfangene Zeitstempel zunächst mit der aktuellen Zeit verglichen wird, und daß erst nach Feststellung einer Übereinstimmung der beiden Zeiten innerhalb eines vorgewählten Zeitfensters die weitere Zugangsfreigabeprozedur ablaufen kann.

12. Verfahren nach einem der Ansprüche 9 bis 11, dadurch gekennzeichnet, daß zusammen mit der Kundennummer auch eine in der Set-Top Box (2) abgespeicherte Gerätenummer an den Server bzw. die Zentralstation (10) weitergeleitet wird.

13. Verfahren nach einem der Ansprüche 9 bis 12, dadurch gekennzeichnet, daß der Systemzugriff trotz Verwendung der Smart-Card (4) und Eingabe der korrekten Geheimzahl gesperrt werden kann, beispielsweise bei durch den befugten Benutzer gemeldetem Verlust der Smart-Card (4) oder bei Nichterfüllung von Verpflichtungen durch den Benutzer.
